# NEUE EUROPÄISCHE PATENTSCHRIFT

(11) **EP 1 052 492 B2**
(45) Veröffentlichungstag und Bekanntmachung des Hinweises auf die Entscheidung über den Einspruch: **10.03.2010**
(45) Hinweis auf die Patenterteilung: 22.10.2003
(21) Anmeldenummer: 00109826.8
(22) Anmeldetag: 09.05.2000
(51) Int. Cl.: G01M 3/24

(54) **Leckdetektoranordnung und -System**
Arrangement and system for detecting leaks
Ensemble et systeme de detection des fuites

(30) Priorität: 10.05.1999 CH 87499
(43) Veröffentlichungstag der Anmeldung: 15.11.2000
(73) Patentinhaber: vonRoll infratec (investment) ag, 6300 Zug (CH)
(72) Erfinder: Wiss, Joe, 6015 Reussbühl (CH)
(74) Vertreter: OK pat AG

(56) Entgegenhaltungen:
- EP-A- 0 940 666
- DE-A- 19 528 287
- US-A- 3 225 859
- US-A- 4 435 974
- US-A- 4 498 333
- US-A- 5 349 568
- US-A- 5 639 958

## Beschreibung

Die Erfindung betrifft ein Leckdetektorsystem gemäss Anspruch 1 zur Ortung von Lecks in einem Rohrsystem zur Leitung von Fluiden, welche einen Vibrationssensor mit einer Membran umfasst.

Leitungs- oder Rohrsysteme für Fluide, insbesondere für Flüssigkeiten und/oder Gase, können z.B. erdverlegt sein. Sie umfassen typischerweise Rohre, Formstücke und Armaturen - die notwendigen Bestandteile von z.B. Trinkwassersystemen. Wasserverluste in solchen Trinkwassernetzen können grosse Kosten durch den Wasserverlust einerseits bzw. durch die notwendige Wiederinstandstellung des Systems und der vom Wasserschaden betroffenen Einrichtungen andrerseits verursachen. Zudem können grössere Schäden an Einrichtungen und Umwelt durch leckende Gasleitungen oder Öl-Pipelines verursacht werden. Auch nicht-erdverlegte Rohrsysteme zur Leitung von Fluiden, d.h. Flüssigkeiten, Gasen bzw. zwei- bis mehrphasigen Mischungen derselben (insbesondere, wenn es sich um toxische oder explosive Fluide handelt) dürfen keine Lecks aufweisen und sollten zumindest sporadisch auf Leckage untersucht werden.

Fluidverluste durch im Leitungssystem auftretende Lecks verursachen Schwingungen, welche als Schallwellen bzw. Strömungsgeräusche vom Leitungssystem selbst und von dem darin transportierten Fluid übertragen werden können. Selbst kleine Lecks, bei deren Auftreten der Schaden, z.B. durch ausfliessendes Wasser, vernachlässigbar oder mindestens noch sehr begrenzt ist, erzeugen solche Strömungsgeräusche. Diese Strömungsgeräusche werden - dank der Dichte des Fluids - bis um ein Vielfaches der Distanz, die sie im Medium Luft zurücklegen könnten - übertragen. Durch Schallmessungen können diese Lecks einerseits erfasst und andrerseits - durch Messung an verschiedenen Stellen eines Netzes - geortet werden.

Aus DE 39 09 337 sind z.B. Verfahren bzw. Vorrichtungen bekannt, mit denen Lecks in Wasser- oder Gasleitungssystemen detektiert werden können. Dabei wird ein Mess- oder Spürgerät entlang einer erdverlegten Leitung bewegt und die standortabhängigen Messwerte durch Kopplung der Bewegung mit einem Ortungssystem registriert. Dieses Verfahren hat den Nachteil, dass die permanente Überwachung, insbesondere eines komplexen Leitungssystems, wegen dem benötigten Personal und den vielen einzusetzenden Vorrichtungen, sehr aufwendig und störanfällig wird. Darüber hinaus ist zu befürchten, dass die durch viele verschiedene Personen erfassten Messwerte nur schwer miteinander verglichen werden können.

Eine weitere Vorrichtung zur Überprüfung von Wasserrohrnetzen ist aus DE 40 36 684 bekannt. Diese Vorrichtung besteht im Wesentlichen aus einem tragbaren Sensor mit einem Taststift, der in Kontakt mit dem zu untersuchenden Leitungsnetz zu bringen ist. Auch der Einsatz dieser Vorrichtung zur permanenten Überwachung eines komplexen Netzes ist sehr aufwendig und eine vergleichbare und reproduzierbare Messung der einzelnen Messwerte durch die wechselnd eingesetzten Mitarbeiter ebenfalls eher unsicher.

Eine Armatur mit integrierbarer, permanenter Lecküberwachung wurde in DE 197 57 581 A1 vorgeschlagen. Diese Armatur zum Anschluss an ein erdverlegtes Leitungssystem für Medien, insbesondere Flüssigkeiten oder Gase, umfasst eine Kontaktfläche, die mit einem Schall-Sensor zum Detektieren von Lecks im Leitungssystem permanent beaufschlagbar ist. Das Funktionsprinzip basiert somit auf der Schallleitung über die Wände des eingesetzten Rohrmaterials, welche mechanisch mit der zitierten Kontaktfläche verbunden sind. Dabei kann der Schall-Sensor permanent z.B. in der Betätigungsspindel der Armatur oder in die Wand der Armatur eingebaut sein. Für homogene Netze, die Rohre aus nur einem Material aufweisen, hat sich diese Lösung bereits bewährt.

Aus US 5,349,568 bzw. aus US 4,435,974 sind gattungsgemässe Anordnungen zum Detektieren von Lecks in Fluidleitungen bekannt. Jeweils ein Ende des Mikrophon-Gehäuses ragt in den Fluidstrom hinein. Damit wird erreicht, dass Fluid auf die Rückseite der Sensor-Membrane gelangen und dadurch ein für die Funktion dieses Sensors wichtiger Druckausgleich auf beiden Seiten einer relativ dünnen Membrane aus rostfreiem Stahl stattfinden kann (US 5,349,568). Auch wird erreicht, dass Fluid in das Gehäuse des Sensors und damit auf die Sensor-Membrane bzw. in ein Gehäuse mit einem als Lärmreflektor wirkenden Luftkissen gelangen kann (US 4,435,974). Diese Vorrichtungen erzeugen beide Turbulenzen im Fluidstrom, welche das empfindliche Erfassen von Messwerten störende Geräusche erzeugen können.

In der Praxis sind aber gerade Wasserleitungssysteme als sogenannte Mischnetze aufgebaut: Wasserrohrsysteme können - besonders wenn sie schon ältere und wiederholt reparierte Teile einschliessen - Rohre und Formteile aus Gusseisen und/oder Stahl, aber auch aus Kunststoffen wie PE (Polyethylen) in beliebiger Reihenfolge und Zusammensetzung umfassen. Wieder andere Rohre können eine Zementbeschichtung und/oder eine von Ort zu Ort unterschiedliche Ablagerung von Kalk aufweisen. Alle diese Materialien und Ablagerungen beeinflussen mehr oder weniger die Leitung von Schallwellen über das Rohrmaterial. Deshalb kann das genaue Lokalisieren eines Lecks in einem solchen Mischnetz eine nur sehr schwer oder gar nicht zu lösende Aufgabe bedeuten.

Oft weisen nicht-erdverlegte Rohrsysteme elastische Dilatationsfugen zwischen den Rohrstücken auf, welche den Ausgleich der Ausdehnung bzw. der Kontraktion der Rohre durch direkte Sonnenbestrahlung oder hohe bzw. tiefe Umgebungstemperaturen ermöglichen. Solche Dilatationsfugen wirken aber als Dämmelemente und erschweren dadurch die Schallleitung, was für die Leckortung unerwünscht ist.

Die Aufgabe der vorliegenden Erfindung besteht darin, eine kostengünstige, einfache Lösung zur permanenten Überwachung eines Leitungssystems für Fluide, insbesondere Flüssigkeiten und/oder Gase, bereitzustellen, welches erlaubt, die Messwerte - unabhängig von der Zahl und vom Ausbildungsstand des jeweils eingesetzten Personals und unabhängig von der Zusammensetzung eines Rohrsystems - mit grosser Empfindlichkeit und praktisch ohne Störung des laminaren Fluidflusses sowie reproduzierbar und deshalb vergleichbar zu erfassen. Die Aufgabe wird durch das Bereitstellen eines Leckdetektorsystems gemäss dem unabhängigen Anspruch 1 gelöst. Besondere Ausgestaltungen des Leckdetektorsystems ergeben sich aus den abhängigen Ansprüchen.

Anhand von stark schematisierten Zeichnungen sollen beispielhaft und keinesfalls abschliessend Ausführungsformen des erfindungsgemässen Leckdetektorsystems beschrieben werden. Es zeigen:
- Fig. 1: eine prinzipielle Schnittdarstellung der erfindungsgemässen Leckdetektoranordnung;
- Fig. 2: eine Schnittdarstellung der in einem Rohr- oder Formstück eingebauten Leckdetektoranordnung;
- Fig. 3: eine Ansichtsdarstellung von in einem Hydranten eingebauten Leckdetektoranordnungen.

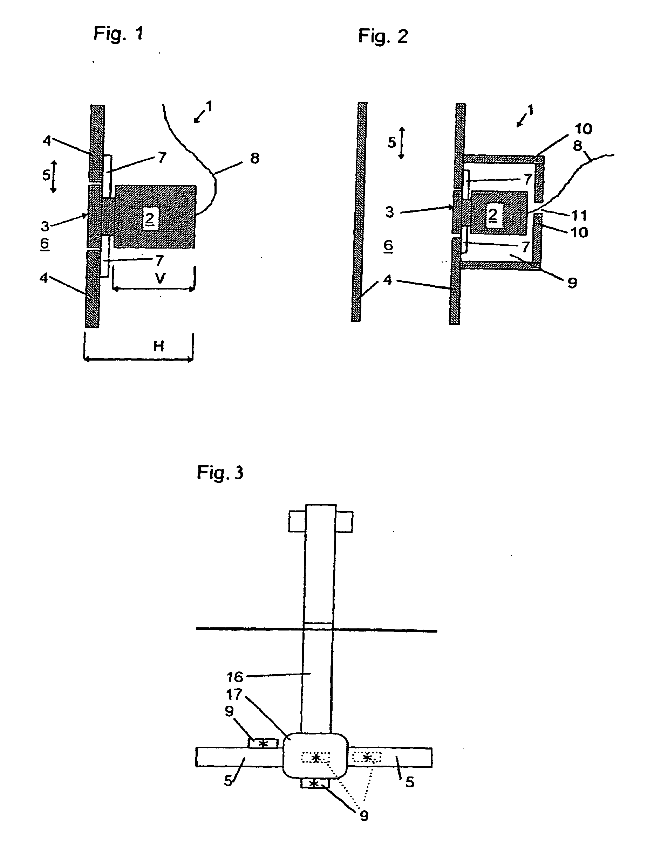

Figur 1 zeigt in einer Schnittdarstellung die prinzipielle, erfindungsgemässe Leckdetektoranordnung 1 zur Ortung von Lecks in einem Rohrsystem zur Leitung von Fluiden. Diese Leckdetektoranordnung 1 umfasst einen Vibrationssensor 2 mit einer Membran 3. Der vibrationssensor 2 ist so in ein Bauelement 4 eines Rohrsystems 5 eingebaut, dass die Membran 3 in direktem Kontakt zu dem in diesem Rohrsystem 5 transportierten Fluidum 6 steht. Als Fluidum werden hier in Rohrleitungen transportierbare Medien bezeichnet, wie Flüssigkeiten, Gase sowie Zwei- und Mehrphasengemische aus Flüssigkeiten und/oder Gasen.

Im Falle eines Rohrsystems zur Wasserverteilung bilden der Vibrationssensor 2 (in Fig. 1 auch mit "V" bezeichnet) und die Membran 3 ein sogenanntes Hydrophon (in Fig. 1 mit "H" bezeichnet). Schallwellen werden hier vom Fluidum Wasser beim Austritt aus einem Leck erzeugt und von der Wassersäule über grosse Distanzen weitergeleitet. Die Membran 3 des Mikrophons bzw. Schalldetektors steht direkt und permanent mit der Wassersäule in Kontakt und kann so die ankommenden Schallwellen mit grosser Empfindlichkeit aufnehmen und an den Vibrationssensor 2 weitergeben. Eine der Fig. 1 entsprechende Anordnung eignet sich auch zum Detektieren von Schallwellen in anderen Fluiden.

Wasserversorgungsleitungen werden mit hohem Druck geprüft. Die Membran 3 muss zu diesem Zweck den Prüfdruck, der typischerweise bis zu 25 bar beträgt, aushalten können. Zudem können in Wasserversorgungsleitungen mechanische Einwirkungen durch z.B. Sand (Abrasion) oder Steine (Schläge) auftreten, gegen die eine solche Membran resistent sein muss. Gasleitungssysteme werden üblicherweise bei einem Innendruck betrieben, der eine laminare Strömung des Gases erlaubt; dies kann bei Normal- (1000 mbar), bei Unterdruck- (über 25 mbar) und bei Überdruckbedingungen (bis über 20 bar) erfolgen. Auch diese Bedingungen muss die direkt den Gasstrom kontaktierende Membran 3 entsprechend dem jeweiligen Einsatzgebiet ertragen. Entsprechend sind der Vibrationssensor 2 und die Membran 3 vorzugsweise zum Detektieren von Schallwellen bei einem Innendruck im Rohrsystem 5 von 10 mbar bis 25 bar ausgebildet.

Lecks in den verschiedensten Systemen zur Leitung von Fluiden erzeugen Schallwellen im Bereich von ca. 5 bis 3000 Hz. Entsprechend sind der Vibrationssensor 2 und die Membran 3 vorzugsweise zum Detektieren von Schallwellen mit einer Frequenz von 5 bis 3000 Hz. ausgebildet. Zudem kann es notwendig sein, dass die Membran chemisch unempfindlich bzw. inert ist, so dass sie weder durch z.B. Säuren und Laugen noch organische und anorganische Lösungsmittel oder starke Oxidations- bzw. Reduktionsmittel angegriffen werden kann.

Des Weiteren ist aus Fig. 1 ersichtlich, dass die Membran 3 der erfindungsgemässen Leckdetektoranordnung 1 praktisch oberflächenbündig mit dem Bauelement 4 des Rohrsystems 5 eingebaut und mit diesem dichtend mittels eines Dichtungsmittels 7 verbunden ist. Die Membran kann auch etwas erhaben oder vertieft angebracht sein, wenn dies aus strömungstechnischen Gründen für das Rohrsystem nicht nachteilig ist. Der Vibrationssensor 2 kann eine eigene Elektronik bzw. einen eingebauten Energiespeicher (nicht dargestellt) umfassen.

Eine Übertragungseinrichtung 8 ist verbindbar mit einem Datalogger ausgebildet und dient zum Übermitteln der erfassten Schallwellen an diesen Datalogger. Der Datalogger (nicht dargestellt) kann auch die Energiequelle für den Vibrationssensor bzw. für dessen Elektronik bereitstellen, so dass nur bei angeschlossenem Datalogger Schallwellen, welche sich über das Fluidum ausbreiten, detektiert werden. Dies ist z.B. bei erdverlegten Wasserschiebern besonders von Vorteil, weil dort die erfindungsgemässe Leckdetektoranordnung 1 nicht einfach zugänglich ist. Die Übertragungseinrichtung 8 kann somit nicht nur zur Übertragung von Daten, sondern auch zur Übertragung von Energie ausgebildet sein. Die Daten werden vorzugsweise auf optischem Wege (z.B. mittels Infrarotimpulsen) auf den Datalogger übertragen; eine elektronische Datenübertragung kann ebenfalls vorgesehen sein, wobei der Fachmann je nach Gegebenheiten die eine oder andere Möglichkeit wählen wird.

Fig. 2 zeigt eine schematische Schnittdarstellung der Leckdetektoranordnung 1, welche in einem Bauelement 4 eingebaut ist, das als Rohr- oder Formstück ausgebildet ist. Die Bezugszeichen entsprechen denjenigen in Fig. 1. An seiner Aussenseite weist das Bauelement 4 einen im wesentlichen geschlossenen Raum bzw. ein Gehäuse 9 auf, den bzw. das Wände 10 begrenzen. Dieses Gehäuse 9 kann ein Bestandteil des Bauelements 4 und mit jenem einstückig hergestellt sein; es kann aber auch am Bauelement 4 nachträglich angebracht sein. Je nach Einsatz und Gegebenheiten können die Wände 10 dieses Gehäuses gegen die Umwelt abgedichtet sein, wobei dann zudem eine Dichtung bevorzugt wird, welche die Öffnung 11 für die Übertragungseinrichtung 8 entsprechend verschliesst.

Falls die Rohrleitung unterirdisch verlegt ist, kann eine Rohrverbindung (nicht gezeigt) zwischen dem Gehäuse 9 und beispielsweise einem Strassendeckel (nicht gezeigt) zum Schutze der Übertragungseinrichtung 8 vorgesehen sein.

Fig. 3 zeigt eine schematisierte Ansichtsdarstellung von einem Hydranten, der erfindungsgemässe Leckdetektoranordnungen 1 an verschiedenen möglichen Einbauorten aulweist. Dargestellt ist lediglich ein Überflurhydrant mit einem Mantelrohr 16 und einem Hauptventilgehäuse 17. Die Ausführungen gelten sinngemäss auch für Unterflurhydranten. Das Gehäuse 9 kann auch hier ein Bestandteil des als Hydranten ausgebildeten Bauelements 4 und mit jenem einstückig hergestellt sein; es kann aber auch am Bauelement 4 nachträglich angebracht sein. Wesentlich ist, dass die Membran bei jeder Leckdetektoranordnung permanent in direktem Kontakt zum in diesem Rohrsystem 5 transportierten Fluidum steht. Nur so ist gewährleistet, dass Schallwellen - welche auch hier vom Fluidum Wasser beim Austritt aus einem Leck erzeugt und von der Wassersäule über grosse Distanzen weitergeleitet werden - von der Membran des Mikrophons bzw. Schalldetektors von der Wassersäule mit grosser Empfindlichkeit aufgenommen und an den Vibrationssensor weitergeben werden. Dieser Forderung folgend, kann der Vibrationssensor mit einer Membran an den in Fig. 3 mit einem Stern bezeichneten Stellen - das heisst an jeder geeigneten Stelle, an welcher die Membran permanent mit der Wassersäule in Kontakt steht - angebracht bzw. eingebaut sein.

Das Bauelement 4 kann, entsprechend den Figuren 2 und 3, sowohl als Rohr- oder Formstück als auch als Armatur (Hydrant, Schieber, Entnahmeventil etc.) ausgebildet sein.

Werden in einem Rohrsystem zur Leitung von Fluiden zumindest zwei der beschriebenen Leckdetektoranordnungen 1 beabstandet angeordnet, so steht ein Leckdetektorsystem zur Ortung von Lecks in solchen Systemen zur Verfügung: Mittels Schallmessungen über beide Leckdetektoranordnungen 1 und mittels Korrelationstechnik zum Vergleich dieser Schallmessungen können damit Lecks mit einer hohen Genauigkeit (im Zentimeterbereich) geortet werden.

Zu den Vorteilen der vorliegenden Erfindung zählen folgende Sachverhalte:
- Die Membran 3 - und damit der Schallaufnehmer des Vibrationssensors 2 - ist direkt im Fluidstrom, d.h. im Flüssigkeits- und/oder Gasstrom eingebaut, damit können die Vibrationen des Fluidums 6 selbst erfasst werden.
- Die hohe Empfindlichkeit der Sensoren und die kontinuierliche Schallübertragung über das Fluidum (ungeachtet des Vorhandenseins eines Mischnetzes) gewährleisten, dass man lange Leitungsabschnitte (bis über 300 m) mit kleinstem Zeitaufwand und reproduzierbar nach Lecks überprüfen kann.
- Sensoren können in sämtlichen Bauteilen 4 eines Rohrleitungsnetzes 5 eingebaut werden. Dies ist insbesondere bei Schiebern, als einem der am meisten auszutauschenden Bauteilen eines Rohrnetzes interessant.
- In Verbindung mit den erfindungsgemäss platzierten Sensoren können herkömmliche Leckortungsgeräte verwendet werden; zusammen mit entsprechenden Mess- und Auswertungsgeräten kann aber auch ein permanentes Überwachungssystem realisiert werden.
- Durch geeignete Platzierung der einzelnen Leckdetektoranordnungen 1 - z.B. an Verzweigungen und dergleichen - kann ein ganzes netzartiges Rohrsystem 5 permanent überwacht oder auch sporadisch auf Leckage untersucht werden.

## Patentansprüche

1. Leckdetektorsystem zur Ortung von Lecks in einem Rohrsystem zur Leitung von Fluiden mit zumindest zwei Leckdetektoranordnungen (1) in Form von Mikrophonen, die jeweils von einem Vibrationssensor (2) und einer Membran (3) gebildet sind, wobei jeder Vibrationssensor (2) so in ein Bauelement (4) des Rohrsystems (5) eingebaut ist, dass die Membran (3) in direktem Kontakt zum in diesem Bauelement (4) und in diesem Rohrsystem (5) transportierten Fluidum (6) steht, und wobei die zumindest zwei Mikrophone (1) in einem Rohrsystem (5) um einen Leitungsabschnitt mit einer Länge von bis über 300 m beabstandet angeordnet sind, **dadurch gekennzeichnet, dass** die Membran (3) jedes Vibrationssensors (2) so in ein Bauelement (4) des Rohrsystems (5) eingebaut ist, dass die eine, druckbeaufschlagte Oberfläche der Membran (3) des Mikrophons (1) permanent und in direktem Kontakt zum in diesem Bauelement (4) und in diesem Rohrsystem (5) transportierten Fluidum (6) steht, und dass die druckbeaufschlagte Oberfläche der Membran (3) des Mikrophons (1) im Wesentlichen oberflächenbündig mit der Innenoberfläche des Bauelements (4) angeordnet ist.

2. Leckdetektorsystem nach Anspruch 1, **dadurch gekennzeichnet, dass** jeder Vibrationssensor (2) und jede Membran (3) zum Detektieren von Schallwellen in einer Flüssigkeit und/oder in einem Gas ausgebildet ist.

3. Leckdetektorsystem nach Anspruch 1 oder 2, **dadurch gekennzeichnet, dass** die Membranen (3) chemisch unempfindlich ausgebildet sind.

4. Leckdetektorsystem nach einem der vorhergehenden Ansprüche, **dadurch gekennzeichnet, dass** die Vibrationssensoren (2) und die Membranen (3) zum Detektieren von Schallwellen bei einem Innendruck im Rohrsystem (5) von 10 mbar bis 25 bar ausgebildet sind.

5. Leckdetektorsystem nach einem der vorhergehenden Ansprüche, **dadurch gekennzeichnet, dass** die Vibrationssensoren (2) und die Membranen (3) zum Detektieren von Schallwellen mit einer Frequenz von 5 bis 3000 Hz ausgebildet sind.

6. Leckdetektorsystem nach einem der vorhergehenden Ansprüche, **dadurch gekennzeichnet, dass** die Vibrationssensoren (2) einen eingebauten Energiespeicher umfassen.

7. Leckdetektorsystem nach einem der vorhergehenden Ansprüche, **dadurch gekennzeichnet, dass** jeder Vibrationssensor (2) mittels einer elektrischen oder optischen Übertragungseinrichtung (8) mit einem Datalogger verbindbar ist.

8. Leckdetektorsystem nach einem der vorhergehenden Ansprüche, **dadurch gekennzeichnet, dass** die Bauelemente (4) als Armatur (Hydrant, Entnahmeventil etc.) ausgebildet sind.

9. Leckdetektorsystem nach einem der vorhergehenden Ansprüche, **dadurch gekennzeichnet, dass** die Bauelemente (4) als Rohr- oder Formstück ausgebildet sind.

## Claims

1. Leak detector system for localization of leaks in a pipe system for conducting fluids having at least two leak detector devices (1) in the form of microphones, which are each formed by a vibration sensor (2) and a membrane (3), each vibration sensor (2) being incorporated in a component (4) of the pipe system (5) in such a way that the membrane (3) is in direct contact with the fluid (6) being conveyed in this component (4) and in this pipe system (5), and the at least two microphones (1) being situated in a pipe system (5) spaced apart by a line section having a length of up to greater than 300 m, **characterized in that** the membrane (3) of each vibration sensor (2) is incorporated in a component (4) of the pipe system (5) in such a way that the surface of the membrane (3) of the microphone (1) that is subjected to pressure is permanently and directly in contact with the fluid (6) transported in this component (4) and in this pipe system (5), and the surface of the diaphragm (3) of the microphone (1) that this is subjected to pressure is essentially flush with the inner surface of the component (4).

2. Leak detector system according to Claim 1, **characterized in that** each vibration sensor (2) and each membrane (3) is designed to detect sound waves in a liquid and/or gas.

3. Leak detector system according to Claim 1 or 2, **characterized in that** the membranes (3) are made chemically inert.

4. Leak detector system according to one of the preceding Claims, **characterized in that** the vibration sensors (2) and the membranes (3) are designed to detect sound waves at an internal pressure in the pipe system (5) of 10 mbar to 25 bar.

5. Leak detector system according to one of the preceding Claims, **characterized in that** the vibration sensors (2) and the membranes (3) are designed to detect sound waves at a frequency between 5 and 3,000 Hz.

6. Leak detector system according to one of the preceding Claims, **characterized in that** the vibration sensors (2) include a built-in energy storage device.

7. Leak detector system according to one of the preceding Claims, **characterized in that** each vibration sensor (2) is connectable to a data logger by means of an electrical or optical transmission installation (8).

8. Leak detector system according to one of the preceding Claims, **characterized in that** the components (4) are implemented as a fitting (hydrant, take-off valve, etc.).

9. Leak detector system according to one of the preceding Claims, **characterized in that** the components (4) are implemented as a pipe element or pipe fitting.

## Revendications

1. Système de détection de fuites utilisé pour repérer des fuites dans un système de canalisations servant à acheminer des fluides, qui comprend au moins deux dispositifs de détection de fuites (1) sous la forme de microphones qui sont formés respectivement d'un capteur de vibrations (2) et d'une membrane (3), chaque capteur de vibrations (2) étant inséré dans un composant (4) du système de canalisations (5) de sorte que la membrane (3) est en contact direct avec le fluide (6) transporté dans ce composant (4) et ce système de canalisations (5), et dans lequel les microphones (1), au moins au nombre de deux, sont disposés dans un système de canalisations (5) en étant écartés d'un tronçon de canalisation présentant une longueur allant jusqu'à plus de 300 m, **caractérisé en ce que** la membrane (3) de chaque capteur de vibrations (2) est insérée dans un composant (4) du système de canalisations (5) de telle manière que la surface pressurisée de la membrane (3) du microphone (1) est en contact permanent et direct avec le fluide (6) transporté dans ce composant (4) et dans ce système de canalisations (5), et **en ce que** la surface pressurisée de la membrane (3) du microphone (1) est disposée pour essentiellement affleurer avec la surface interne du composant (4).

2. Système de détection de fuites selon la revendication 1, **caractérisé en ce que** chaque capteur de vibrations (2) et chaque membrane (3) sont conçus pour détecter des ondes sonores dans un liquide et/ou dans un gaz.

3. Système de détection de fuites selon la revendication 1 ou 2, **caractérisé en ce que** les membranes (3) sont conçues de façon chimiquement neutre.

4. Système de détection de fuites selon l'une des revendications précédentes, **caractérisé en ce que** les capteurs de vibrations (2) et les membranes (3) destinés à détecter des ondes sonores sont conçus pour une pression interne dans le système de canalisations (5) allant de 10 mbar à 25 bar.

5. Système de détection de fuites selon l'une des revendications précédentes, **caractérisé en ce que** les capteurs de vibrations (2) et les membranes (3) destinés à détecter des ondes sonores sont conçus pour une fréquence allant de 5 à 3000 Hz.

6. Système de détection de fuites selon l'une des revendications précédentes, **caractérisé en ce que** les capteurs de vibrations (2) comprennent un réservoir d'énergie intégré.

7. Système de détection de fuites selon l'une des revendications précédentes, **caractérisé en ce que** chaque capteur de vibrations (2) peut être relié à un collecteur de données à l'aide d'une installation de transmission électrique ou optique (8).

8. Système de détection de fuites selon l'une des revendications précédentes, **caractérisé en ce que** les composants (4) sont conçus comme une pièce de robinetterie (prise d'eau, valve de drainage, etc.).

9. Système de détection de fuites selon l'une des revendications précédentes, **caractérisé en ce que** les composants (4) sont conçus comme un élément ou un raccord de tuyau.
